(19) **Europäisches Patentamt**
**European Patent Office**
**Office européen des brevets**

(11) **EP 2 736 690 B1**

(12) **FASCICULE DE BREVET EUROPEEN**

(45) Date de publication et mention de la délivrance du brevet:
**16.09.2015 Bulletin 2015/38**

(21) Numéro de dépôt: **12740945.6**

(22) Date de dépôt: **25.07.2012**

(51) Int Cl.:
**B29B 7/18** (2006.01)    **B29B 7/74** (2006.01)
**B29B 7/82** (2006.01)    **B29B 7/90** (2006.01)
**B29B 7/00** (2006.01)    **B29B 7/10** (2006.01)
**B60C 1/00** (2006.01)

(86) Numéro de dépôt international:
**PCT/EP2012/064593**

(87) Numéro de publication internationale:
**WO 2013/017505 (07.02.2013 Gazette 2013/06)**

(54) **PROCEDE DE FABRICATION D'UNE COMPOSITION DE CAOUTCHOUC A HAUTE TEMPERATURE**

VERFAHREN ZUR HERSTELLUNG EINER KAUTSCHUKZUSAMMENSETZUNG BEI HOHER TEMPERATUR

METHOD FOR THE PRODUCTION OF A RUBBER COMPOSITION AT HIGH TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2011 FR 1156943**

(43) Date de publication de la demande:
**04.06.2014 Bulletin 2014/23**

(73) Titulaires:
  • **Compagnie Générale des Etablissements Michelin**
    **63000 Clermont-Ferrand (FR)**
  • **MICHELIN Recherche et Technique S.A.**
    **1763 Granges-Paccot (CH)**

(72) Inventeurs:
  • **LOUBARESSE, Jean-Marc**
    **F-63040 Clermont-Ferrand Cedex 9 (FR)**
  • **ELOY, Marie**
    **F-63040 Clermont-Ferrand Cedex 9 (FR)**
  • **LOYAU, Julien**
    **F-63040 Clermont-Ferrand Cedex 9 (FR)**
  • **VOISIN, Floriandre**
    **F-63040 Clermont-Ferrand Cedex 9 (FR)**
  • **HUGUENOT, Gérald**
    **F-63040 Clermont-Ferrand Cedex 9 (FR)**

(74) Mandataire: **Cohen, Sylvia**
    **Manufacture Française des Pneumatiques MICHELIN**
    **23, place des Carmes-Déchaux**
    **DGD/PI - F35 - Ladoux**
    **63040 Clermont-Ferrand Cedex 9 (FR)**

(56) Documents cités:
    **EP-A- 1 213 110        EP-A- 1 598 394**
    **US-A1- 2002 068 774**

**Description**

L'invention concerne le domaine du mélangeage des élastomères et plus particulièrement de la fabrication de compositions de caoutchouc destinées à la réalisation de pneumatiques servant à équiper les véhicules roulants.

L'exigence de performance des pneumatiques modernes, au delà des qualités requises par les conditions de roulage parfois extrêmes, s'oriente de plus en plus vers la durabilité du pneumatique et la réduction de sa résistance de roulement.

Il est connu de l'homme de l'art que l'amélioration de la résistance à l'usure peut se traduire par une augmentation de la dissipation d'énergie, et que les progrès réalisés ces dernières années sont l'objet de compromis entre ces deux performances dont on s'attache à repousser les limites en modifiant les compostions de caoutchouc et en explorant de nouvelles méthodes de fabrication.

L'invention a pour objet de proposer une méthode permettant, sans affecter la performance en usure, de réduire fortement les phénomènes de dissipation d'énergie à l'intérieur du matériau, lorsque ce dernier est soumis à des contraintes cycliques.

Les propriétés viscoélastiques d'un matériau sont décrites par des grandeurs physiques telles que le module visqueux (G"), le module élastique (G'), ou encore par le rapport $\dfrac{G''}{G'} = Tg\delta$ , qui est la tangente de l'angle de déphasage entre la contrainte et la déformation, lorsque le matériau subit une contrainte sinusoïdale, et qui permet entre autre, de caractériser les phénomènes de dissipation à l'intérieur du matériau.

Aussi, la réduction de la valeur du $Tg\delta$ des matériaux à base d'élastomère utilisés dans la construction d'un pneumatique présente un intérêt particulier pour atténuer les phénomènes liés à l'échauffement des dits pneumatiques, et pour réduire la résistance à l'avancement des véhicules.

Le procédé décrit dans la demande de brevet FR 10/52949, publiée comme FR2958874 A1 consiste à utiliser de manière particulière et originale un dispositif de mélangeage en continu de type connu, et à proposer des plages de fonctionnement dudit dispositif permettant d'atteindre des niveaux de cisaillement élevés du mélange, afin d'obtenir des compositions de caoutchouc ayant des propriétés très décalées et inattendues, par rapport aux procédés d'obtention usuels.

Le procédé selon l'invention poursuit les mêmes objectifs, et repose sur l'utilisation d'un moyen de mélangeage plus classique, de type mélangeur interne comprenant une cuve de mélangeage dans laquelle sont montés des rotors animés en rotation et comportant des projections radiales formant entre elles et avec la cuve un entrefer destiné à mélanger intimement les différents composants introduits préalablement dans la cuve selon des proportions prédéterminées. Le document US 2002/068774 A1 divulgue un procédé selon le préambule de la revendication 1.

Le procédé prévoit les étapes au cours desquelles :

A - on introduit dans un moyen de mélangeage de type mélangeur interne du type comprenant une cuve de mélangeage dans laquelle sont montés des rotors animés en rotation et comportant des projections radiales formant entre elles et

avec la cuve un entrefer, une matrice de caoutchouc, des charges de renforcement, et éventuellement d'autres composants, à l'exception du système de réticulation,

B - on effectue le mélangeage desdits composants dans la cuve jusqu'à obtenir un mélange homogène en s'assurant que la température du mélange demeure inférieure ou égale à 170°C puis,

C - on régule la vitesse de rotation des rotors de manière à porter la composition de caoutchouc à une température de tombée comprise entre 180°C et 240°C, en un temps inférieur à 600 secondes, et préférentiellement inférieur à 400 secondes,

D - une fois la température de tombée atteinte, on extrait la composition de caoutchouc initiale du mélangeur interne et on abaisse la température de ladite composition à une température inférieure à 140°C en moins de 5 minutes.

La montée en température finale en un temps très court et à un niveau très élevé par rapport aux niveaux de température couramment pratiqués dans l'industrie du caoutchouc, permet d'obtenir une composition finale réalisée avec ladite composition initiale ayant des propriétés décalées.

Lorsque les charges de renforcement sont constituées à titre majoritaire de silice, la température de tombée est comprise préférentiellement entre 180°C et 200°C.

Lorsque les charges de renforcement sont constituées à titre majoritaire de noir de carbone, la température de tombée est comprise préférentiellement entre 200°C et 240°C.

Il est également possible, au cours de l'étape A, d'incorporer également des additifs.

Bien que cette valeur ne soit pas limitative, on choisira préférentiellement, un taux de remplissage du mélangeur interne supérieur ou égal à 70%.

Le taux de remplissage est la part du volume occupé par la composition de caoutchouc dans la chambre de mélangeage, et dont le volume correspond au volume libre disponible entre les palettes du mélangeur interne et la paroi interne de la cuve.

Au cours de l'étape C, et avant d'extraire la composition de caoutchouc initiale du mélangeur, on pourra utilement maintenir ladite composition à la température de tombée pendant un temps donné, tout en veillant à ce que la durée totale de ladite étape C n'excède pas 600 secondes.

De manière avantageuse, pour obtenir la température désirée dans le temps imparti on s'arrangera pour que le total de l'énergie spécifique conférée au mélange pendant l'ensemble des opérations de mélangeage soit comprise entre 1000 joules/grammes et 7500 joules/grammes.

De manière conventionnelle, à l'issue de l'étape D, on réalise une composition de caoutchouc finale à l'aide d'un ou plusieurs moyen(s) de mélangeage continu ou discontinu de type mélangeur interne et/ou externe, en incorporant un volume prédéterminé de la composition de caoutchouc initiale, le système de réticulation, ainsi qu'un complément éventuel d'élastomère, de charges et d'additifs, en choisissant les paramètres de fonctionnement du moyen de mélangeage en continu ou discontinu de sorte que l'énergie spécifique complémentaire conférée à la composition de caoutchouc au cours de cette étape soit comprise entre 500 joules/grammes et 2000 joules/grammes.

L'énergie spécifique conférée à la composition de caoutchouc pendant la durée d'une étape du processus de fabrication dans un moyen de mélangeage, correspond à l'énergie (en joules) fournie au mélange par le moteur (ou les moteurs) servant à faire tourner les rotors du mélangeur, divisée par la masse de la composition de caoutchouc réalisée. Cette énergie peut se calculer par la formule suivante :

$$\left(\int_{0}^{T} P(t)dt\right) \div M \ .$$

dans laquelle :

- P(t) est la puissance (en watt) instantanée fournie par le moteur (ou les moteurs), diminuée de la puissance consommée par les moyens de transmission entre l'arbre du moteur et les palettes,
- M est la masse totale (en gramme) de mélange introduite dans le mélangeur interne.
- T est la durée de l'étape de mélangeage.

En première approche, le calcul de la puissance consommée par les moyens de transmissions peut se faire aisément, en mesurant la puissance électrique consommée par le moteur (ou les moteurs) lorsque l'installation tourne à vide.

Les propriétés de la composition sont bien évidemment appréciées une fois que le mélange final est achevé, c'est-à-dire lorsque l'ensemble des composants ont été introduits, lesquels comprennent en particuliers les agents de réticulation.

On observe, comme on le verra par la suite à l'aide des résultats expérimentaux, et pour une large variété de composition de caoutchouc réalisée à l'aide dudit procédé, une diminution de la valeur de la tangente 8, en comparaison de la fabrication du même mélange à l'aide d'un procédé conventionnel de fabrication sur des mêmes moyens identiques.

Dans le cadre de la présente description, on entend par composition de caoutchouc une composition à base d'au moins un élastomère de préférence diénique, tel qu'un caoutchouc naturel ou synthétique, comprenant des charges renforçantes, des additifs, et un système de vulcanisation.

L'élastomère (ou indistinctement "caoutchouc") utilisé est de préférence du type diénique, bien que d'autres élastomères soient utilisables. Par élastomère "diénique", on entend de manière connue un élastomère issu au moins en partie (i.e., un homopolymère ou un copolymère) de monomères diènes (monomères porteurs de deux doubles liaisons carbone-carbone, conjuguées ou non).

L'élastomère diénique choisi appartiendra de préférence au groupe constitué par les polybutadiènes (BR) (notamment ceux ayant un taux de liaisons cis-1,4 supérieur à 90%), les polyisoprènes de synthèse (IR) de préférence du type cis-1,4, le caoutchouc naturel (NR), les copolymères de butadiène, les copolymères d'isoprène et les mélanges de ces élastomères ; de tels copolymères sont choisis plus préférentiellement dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'isobutène et d'isoprène (IIR) et les mélanges de tels copolymères.

Selon d'autres modes de réalisation, l'élastomère diénique peut être aussi constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères.

Toute charge connue pour ses capacités à renforcer une composition de caoutchouc est utilisable comme charge renforçante, par exemple une charge organique telle que du noir de carbone, ou encore une charge inorganique telle que de la silice, à laquelle est associé de manière connue un agent de couplage.

Comme noirs de carbone conviennent notamment tous les noirs de carbone conventionnellement utilisés dans les pneumatiques (noirs dits de grade pneumatique). Parmi ces derniers, on citera plus particulièrement les noirs de carbone de grade (ASTM) 100, 200, 300, 600 ou 700 (par exemple N134, N234, N326, N330, N347, N375, N683, N772) et de manière générale des noirs ayant une surface spécifique préférentiellement inférieure à 200 m$^2$ par gramme (mesure CTAB).

Comme charges inorganiques renforçantes conviennent notamment des charges minérales du type silice ($SiO_2$), notamment les silices précipitées ou pyrogénées présentant une surface BET inférieure à 450 m$^2$/g, de préférence inférieure à 200 m$^2$/g. Le taux de charge renforçante est de préférence supérieur à 30 pce, par exemple compris entre 40 et 140 pce (pce signifiant parties en poids pour cents parties d'élastomère total).

La composition de caoutchouc est du type réticulable ou réticulée, c'est-à-dire qu'elle comprend par définition un système de réticulation adapté pour permettre la réticulation de la composition lors de sa cuisson (i.e., son durcissement). De préférence, le système de réticulation de la matrice de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce ; l'accélérateur primaire de vulcanisation, par exemple un sulfénamide, est utilisé à un taux préférentiel compris entre 0,5 et 10 pce.

La composition de caoutchouc peut comporter également tout ou partie des additifs habituellement utilisés dans les matrices de caoutchouc destinées à la fabrication de pneumatiques, tels que par exemple des agents de couplage, des agents de protection tels que des agents anti-vieillissement, des antioxydants, des antiozonants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C, des agents facilitant la mise en oeuvre (processabilité) des compositions à l'état cru, des résines tackifiantes, des agents antiréversion, des résines renforçantes.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

La description qui suit s'appuie sur un exemple de mise en oeuvre du procédé à l'aide des dispositifs connus, dont on rappellera brièvement le fonctionnement en s'appuyant sur les figures 1 à 3 dans lesquelles :

- la figure 1 représente une vue schématique d'un mélangeur interne,
- la figure 2 représente une vue schématique d'un outil à rouleau,
- la figure 3 représente une vue schématique des différentes étapes du procédé.

Les moyens utilisés pour mettre en oeuvre le procédé selon l'invention sont connus en soi de l'homme du métier et ne sont décrits ici qu'à titre de rappel. L'installation comprend un mélangeur interne 100, des moyens de refroidissement 200, en l'espèce un outil à rouleau, et des moyens de mélangeage destinés à réaliser la composition finale qui peuvent indifféremment être formés par un mélangeur interne similaire au mélangeur 100 ou un mélangeur externe du type outil à rouleau identique aux moyens de refroidissement 200.

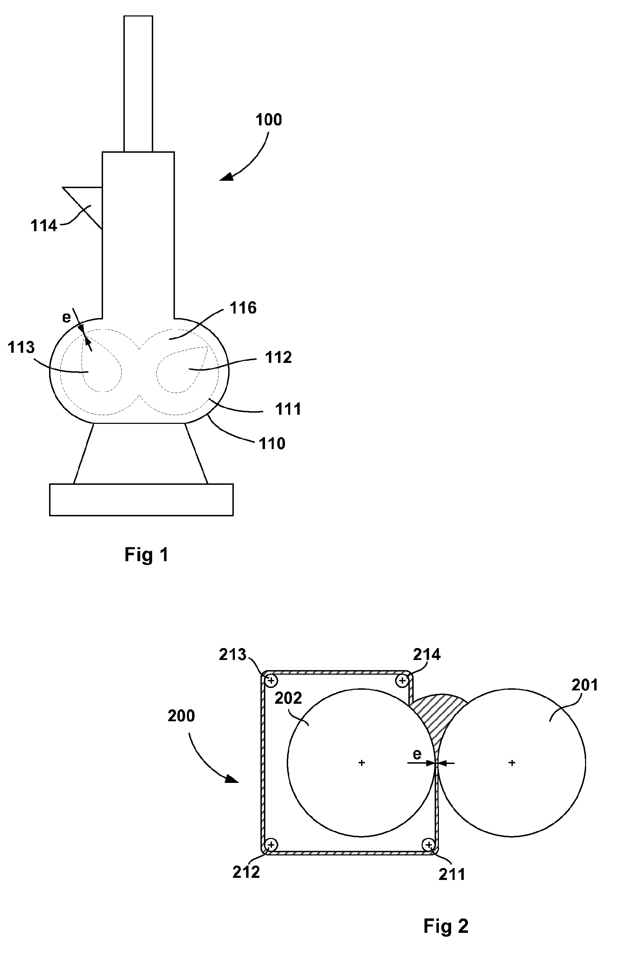

Le mélangeur interne représenté à la figure 1, comporte une cuve 110 dont la surface interne 111 délimite le volume interne 116. Le mélangeur peut être, de manière non exclusive, du type engrenant ou tangentiel.

Un moteur (non représenté) anime en rotation des palettes de mélangeage, 112 et 113, par l'intermédiaire d'un moyen de transmission du type boîte à vitesse (non représentée). La puissance consommée par lesdits moyens de transmission est sensiblement constante, et peut être évaluée comme cela a été déjà indiqué, en faisant tourner l'installation à vide.

Des moyens d'introduction 114 sont prévus en tête du mélangeur 100, pour introduire les composants.

L'entrefer e correspond à la plus faible distance entre les palettes et la surface interne 211 de la cuve 210.

De manière connue, ce mélangeur interne peut comporter également des moyens de régulation thermique permettant d'adapter la température de la composition de caoutchouc à l'intérieur de la cuve.

Le refroidissement de la composition de caoutchouc initiale en sortie de l'appareil de mélangeage en continu peut être réalisé à l'aide de plusieurs moyens connus de l'homme du métier, utilisés seuls ou en combinaison, tels que :

- un outil tel que représenté à la figure 2, comprenant deux rouleaux 201 et 202, comportant des canaux dans lesquels circule un fluide réfrigérant, placés sous la surface des cylindres, et dont l'entrefer e réduit permet de calandrer la gomme pour créer une feuille de faible épaisseur,
- un bain d'eau réfrigérée dans lequel circule la bande de gomme à refroidir,
- une soufflerie d'air frais.

Ce moyen doit permettre le refroidissement de la composition de caoutchouc initiale d'une température de tombée comprise entre 180°C et 240°C, à une température inférieure à 140°C, en un temps inférieur à 5 minutes, de manière à éviter la dégradation de la matrice élastomère lorsqu'elle est maintenue trop longtemps à une température élevée. La feuille de gomme produite dans l'entrefer des rouleaux 201 et 202 peut utilement recirculer autour des rouleaux 211, 212, 213 et 214 afin de faire chuter la température plus rapidement.

La réalisation de la composition de caoutchouc finale se fait de manière plus classique et connue de l'homme du métier. En l'espèce, pour la réalisation de cette composition finale au cours de laquelle on introduit le système de vulcanisation, il a été préféré l'utilisation d'un outil à rouleau de type mélangeur externe.

Ce type de mélangeur, bien qu'il requière un temps de cycle important, convient particulièrement bien lorsque l'on désire effectuer un mélangeage à basse température

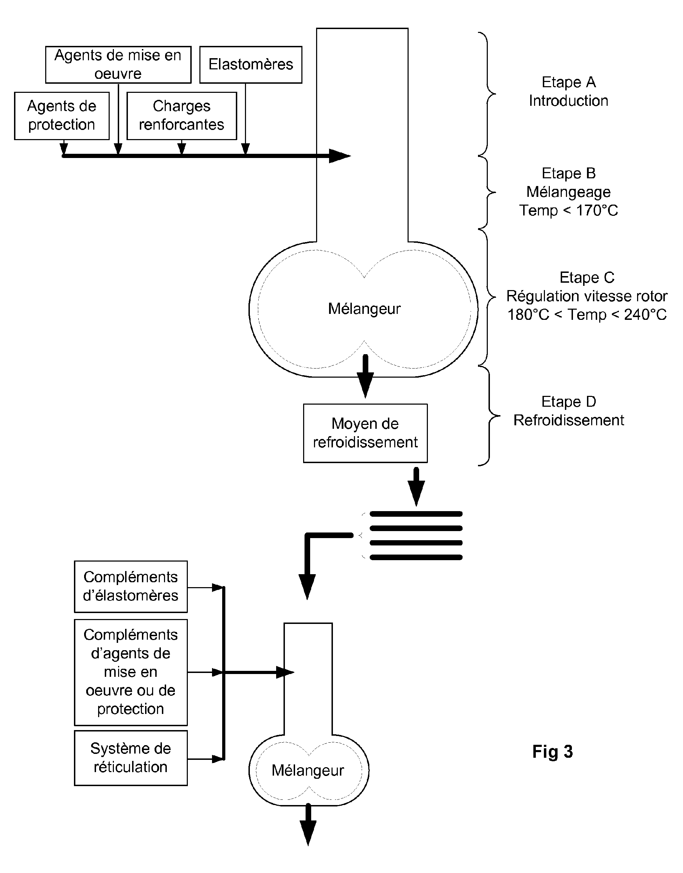

La figure 3 permet de visualiser les étapes du procédé selon l'invention.

Au cours de la première étape A, on introduit les élastomères et les charges renforçantes, et enfin les composants supplémentaires de la formule tels que les additifs.

Compte tenu de la grande quantité d'énergie conférée à la composition de caoutchouc initiale au cours des étapes B et C, aucun des composants principaux formant le système de réticulation n'est introduit au cours de cette première étape A.

Le mélangeage des composants se poursuit, pendant l'étape B, de manière tout à fait classique et connue, en mettant en oeuvre les techniques générales du mélangeage. Cette phase de transformation, qui a pour but d'assurer une pénétration intime des charges renforçantes dans la matrice d'élastomère, se fait à une température qui ne dépasse pas 170°C.

Une fois obtenu l'état de mélangeage attendu, on peut alors entrer dans l'étape C qui consiste à réguler la vitesse de rotation des palettes 112 et 113 de manière à faire évoluer rapidement la température du mélange à l'intérieur de la cuve jusqu'à ce que l'on atteigne la température de tombée située entre 180°C et 240°C.

On observera à ce stade de la description que l'un des moyens connu permettant de faire chauffer rapidement la composition de caoutchouc initiale contenue dans la cuve, consiste à augmenter la proportion de charges renforçantes par rapport à la quantité d'élastomères, ce qui a pour effet d'augmenter la viscosité du mélange et d'augmenter la quantité d'énergie fournie par le cisaillement du mélange lors du passage dans l'entrefer e entre la cuve et les palettes. Si tel est le cas, il sera nécessaire, lors de la réalisation de la composition de caoutchouc finale, de rajouter un complément d'élastomères, de manière à rétablir les proportions imposées par la formulation de la composition de caoutchouc finale.

La montée en température du mélange dans la cuve doit être la plus rapide possible et doit se faire en un temps ne dépassant pas 600 secondes et préférentiellement un temps inférieur à 400 secondes.

C'est au cours de cette étape C que les propriétés de la composition de caoutchouc initiale sont modifiées par rapport à celles obtenues avec une composition de caoutchouc ne subissant pas cette augmentation importante de température.

Bien que tous les phénomènes physiques mis en jeu ne soient pas définitivement éclaircis, on observe toutefois une redistribution des charges de renforcement dans la matrice élastomère qui semble être à l'origine de ces évolutions de propriétés. En limitant le temps pendant lequel la composition est portée à très haute température, on limite les effets susceptibles de dégrader la matrice élastomère elle-même.

Lorsque la composition de caoutchouc contient une charge renforçante composée majoritairement de silice, cette évolution se produit préférentiellement en portant la composition initiale à une température comprise entre 180°C et 200°C.

En revanche, lorsque la composition de caoutchouc finale contient une charge renforçante contenant majoritairement du noir de carbone, les effets les plus notables se font ressentir en portant ladite composition à une température comprise entre 200°C et 240°C.

Une fois cette température atteinte, il est possible de prolonger l'étape C en maintenant quelques dizaines de secondes le mélange à la température haute finale considérée comme la température de tombée. On veillera toutefois à ce que le temps total de l'étape C, qui court depuis le début de la phase d'accroissement de température, correspondant à la consigne de modification de la vitesse des palettes, jusqu'à la consigne d'extraction de la composition, correspondant à l'ouverture de la cuve, n'excède pas les 600 secondes.

A l'ouverture de la cuve, à l'étape D, la composition initiale est recueillie sur un moyen de refroidissement de manière à faire chuter la température, de la température de tombée à une température inférieure à 140°C, en un temps relativement court de manière à limiter les effets de la température sur la matrice élastomère. Ce temps ne doit pas excéder 5 minutes.

A l'issue de l'étape D, la composition de caoutchouc initiale peut être temporairement stockée, ou être directement utilisée pour la fabrication de la composition de caoutchouc finale.

La finition de la composition de caoutchouc finale se fait à l'aide de moyens de mélangeages classiques dans lequel on introduit un volume prédéterminé de la composition de caoutchouc initiale, l'ensemble des composants formant le système de réticulation, ainsi que les compléments éventuels d'élastomères et d'additifs.

On pourra utilement réaliser cette dernière phase sur l'outil à cylindre décrit à la figure 2 ou encore dans un mélangeur interne du type de celui décrit précédemment.

Alternativement, lorsque la composition finale est réalisée à l'aide d'un mélangeur interne du type de celui décrit à la figure 1, et lorsque le volume d'élastomère introduit en supplément est important on se rapproche alors de la technique connue dite d'introduction de gommes décalées, et il peut se produire une élévation importante de température nécessitant une étape supplémentaire pour introduire le système de réticulation. Cette introduction peut alors se faire sur un mélangeur externe ou interne dont les conditions de marche ont été adaptées.

A titre d'exemple, les résultas comparatifs suivants ont été obtenus pour une composition de caoutchouc A à base de caoutchouc naturel (NR) et de noir de carbone du type :

| Composition A | en PCE |
|---|---|
| NR | 100 |
| N234 | 54 |
| 6PPD[1] | 3 |
| Paraffine 6266 | 1 |
| Acide stéarique | 1,5 |
| ZnO | 3 |
| CBS[2] | 1,2 |
| Soufre | 1,2 |
| [1] Santoflex 6PPD fourni par la Sté Flexsys<br>[2] Santocure CBS fourni par la Sté Flexsys | |

La composition de caoutchouc finale améliorée A a été obtenue avec le procédé selon l'invention, dont les principaux paramètres de fonctionnement sont résumés ci-après :

| Procédé selon l'invention,<br>Composition initiale A | Mélangeur interne Etapes A, B, C |
|---|---|
| Volume de la cuve | 422 cm$^3$ |
| Température de tombée | 200°C |
| Coefficient de remplissage | 70% |
| Energie spécifique fournie | 7600 J/g |
| Temps de séjour entre 180°C et 200°C | 500 sec. |

| Procédé selon l'invention,<br>Composition initiale A | Outil à cylindre Etape D |
|---|---|
| Temps de refroidissement | 4 min |
| Température des cylindres | 30°C |
| Entrefer | 3mm |
| Diamètre des cylindres | 150 mm |
| Vitesse cylindre 1 | 15 rpm |
| Vitesse cylindre 2 | 20 rpm |

| Procédé selon l'invention | |
|---|---|
| **Composition finale A** | **Finition Outil à cylindre** |
| Temps de mélangeage | 10 min |
| Entrefer | 2,5 mm |
| Diamètre des cylindres | 150 mm |
| Vitesse cylindre 1 | 15 rpm |
| Vitesse cylindre 2 | 20 rpm |

Les résultats témoins sont obtenus à l'aide d'un procédé témoin de mise en oeuvre classique du type mélangeur interne et externe en deux phases (introduction du système de réticulation sur un outil à cylindre de type mélangeur externe) pour une composition de caoutchouc A' identique à A, et dont les principaux paramètres de fonctionnement sont résumés ci après :

| Procédé conventionnel | |
|---|---|
| **Composition initiale A'** | **Mélangeur interne** |
| Volume de la cuve | 422 cm$^3$ |
| Temps de mélangeage | 150 sec |
| Température de tombée | 165°C |
| Coefficient de remplissage | 70% |
| Vitesse palette | 80 et 100 rpm |
| Energie spécifique fournie | 1250 J/g |

| Procédé conventionnel | |
|---|---|
| **Composition finale A'** | **Finition Outil à cylindre** |
| Temps de mélangeage | 10 min |
| Entrefer | 2,5 mm |
| Diamètre des cylindres | 150 mm |
| Vitesse cylindre 1 | 15 rpm |
| Vitesse cylindre 2 | 20 rpm |

Les valeurs comparatives (en base 100) suivantes ont été obtenues :

| | Procédé témoin Composition A' | Procédé selon l'invention Composition A |
|---|---|---|
| Module à 100 | 100 | 86 |
| Module à 300 | 100 | 112 |
| Module à 300/Module à 100 | 100 | 130 |
| Tangente $\delta_{max}$ | 100 | 70 |

On entend par module à 100 le module d'élongation d'une éprouvette réalisée avec la composition de caoutchouc, après vulcanisation à 150°C.

Ces mesures sont effectuées conformément à la norme française NFT 46-002 de septembre 1988, qui prévoit la mesure en première élongation (i.e. sans cycle d'accommodation - les modules sont alors notés M) des modules sécants vrais (i.e. calculés en se ramenant à la section réelle de l'éprouvette), exprimés en MPa, à 100% et à 300% d'allongement. Ces mesures de traction sont effectuées dans les conditions normales de température et d'hygrométrie (23°C +/- 2°C, 50 +/- 5 % d'humidité relative ; norme française NF T 40-01 de décembre 1979).

Les propriétés dynamiques (tangente $\delta$) sont mesurées sur un viscoanalyseur (Metravib VA4000), selon la norme ASTM D5992-96. On enregistre la réponse d'un échantillon de la composition de caoutchouc vulcanisée (éprouvette cylindrique de 2mm d'épaisseur et de 315 mm$^2$ de section), soumis à une sollicitation sinusoïdale en cisaillement simple alterné, à la fréquence de 10Hz, à une température de 23°C. On effectue un balayage en amplitude de déformation crête à crête de 0,1% à 50% (cycle aller) puis de 50% à 0,1% (cycle retour) ; pour le cycle retour, on enregistre la valeur maximale du facteur de perte noté tan $\delta_{max}$.

D'autres essais ont été réalisés pour une composition de caoutchouc B identique à A et pour lesquels on a fait varier la température de tombée.

| Composition B | en PCE |
|---|---|
| NR | 100 |
| N234 | 54 |
| 6PPD[(1)] | 3 |
| Paraffine 6266 | 1 |
| Acide stéarique | 1,5 |
| ZnO | 3 |
| CBS[(2)] | 1,2 |
| Soufre | 1,2 |
| [(1)] Santoflex 6PPD fourni par la Sté Flexsys [(2)] Santocure CBS fourni par la Sté Flexsys | |

La composition de caoutchouc finale améliorée B a été obtenue avec le procédé selon l'invention dont les principaux paramètres de fonctionnement sont résumés ci-après :

| Procédé selon l'invention, | |
|---|---|
| **Composition initiale B** | **Mélangeur interne Etapes A, B, C** |
| Volume de la cuve | 422 cm$^3$ |
| Température de tombée | 240°C |
| Coefficient de remplissage | 70% |
| Energie spécifique fournie | 2490 J/g |
| Temps de séjour entre 180°C et 200°C | 200 sec. |

| Procédé selon l'invention, | |
|---|---|
| **Composition initiale B** | **Outil à cylindre Etape D** |
| Temps de refroidissement | 4 min |
| Température des cylindres | 30°C |
| Entrefer | 3mm |
| Diamètre des cylindres | 150 mm |
| Vitesse cylindre 1 | 15 rpm |
| Vitesse cylindre 2 | 20 rpm |

| Procédé selon l'invention | |
|---|---|
| **Composition finale B** | **Finition Outil à cylindre** |
| Temps de mélangeage | 10 min |
| Entrefer | 2,5 mm |
| Diamètre des cylindres | 150 mm |

(suite)

| Procédé selon l'invention | |
|---|---|
| **Composition finale B** | **Finition Outil à cylindre** |
| Vitesse cylindre 1 | 15 rpm |
| Vitesse cylindre 2 | 20 rpm |

Le témoin B' a été obtenu à l'aide d'un procédé conventionnel identique à celui de A'.

| Procédé conventionnel | |
|---|---|
| **Composition initiale B'** | **Mélangeur interne** |
| Volume de la cuve | 422 cm$^3$ |
| Temps de mélangeage | 150 sec |
| Température de tombée | 165°C |
| Coefficient de remplissage | 70% |
| Vitesse palette | 80 et 120 rpm |
| Energie spécifique fournie | 1250 J/g |

| Procédé conventionnel | |
|---|---|
| **Composition finale B'** | **Finition Outil à cylindre** |
| Temps de mélangeage | 10 min |
| Entrefer | 2,5 mm |
| Diamètre des cylindres | 150 mm |
| Vitesse cylindre 1 | 15 rpm |
| Vitesse cylindre 2 | 20 rpm |

Les valeurs comparatives (en base 100) suivantes ont été obtenues :

| | Procédé témoin Composition B' | Procédé selon l'invention Composition B |
|---|---|---|
| Module à 100 | 100 | 86 |
| Module à 300 | 100 | 107 |
| Module à 300/Module à 100 | 100 | 119 |
| Tangente $\delta_{max}$ | 100 | 82 |

Un troisième essai a été réalisé à l'aide d'une composition de caoutchouc C à base de silice :

| Composants | en PCE |
|---|---|
| NR | 100 |
| Silice 160MP | 50 |
| N234 | 3 |
| Silane liquide | 5,5 |
| TMQ | 1 |
| 6PPD[1] | 1,5 |
| Paraffine 6266 | 1 |
| Acide stéarique | 2,5 |
| ZnO | 3 |
| CBS[2] | 1,8 |

(suite)

| Composants | en PCE |
|---|---|
| Soufre | 1,5 |

[1] Santoflex 6PPD fourni par la Sté Flexsys
[2] Santocure CBS fourni par la Sté Flexsys.

La composition de caoutchouc finale améliorée C a été obtenue avec le procédé selon l'invention dont les principaux paramètres de fonctionnement sont résumés ci-après :

| Procédé selon l'invention, | |
|---|---|
| Composition initiale C | Mélangeur interne Etapes A, B, C |
| Volume de la cuve | 7777 cm$^3$ |
| Température de tombée | 180°C |
| Coefficient de remplissage | 70% |
| Energie spécifique fournie | 1390 J/g |
| Temps de séjour entre 180°C et 200°C | 60 sec. |

| Procédé selon l'invention, | |
|---|---|
| Composition initiale C | Outil à cylindre Etape D |
| Temps de refroidissement | 4 min |
| Température des cylindres | 30°C |
| Entrefer | 2 mm |
| Diamètre des cylindres | 300 mm |
| Vitesse cylindre 1 | 12 rpm |
| Vitesse cylindre 2 | 16,2 rpm |

| Procédé selon l'invention | |
|---|---|
| Composition finale C | Finition Outil à cylindre |
| Temps de mélangeage10 min | |
| Entrefer2 mm | |
| Diamètre des cylindres300 mm | |
| Vitesse cylindre 112 rpm | |
| Vitesse cylindre 216,2 rpm | |

Le témoin C' a été obtenu à l'aide d'un procédé conventionnel similaire aux précédents.

| Procédé conventionnel | |
|---|---|
| Composition initiale C' | Mélangeur interne |
| Volume de la cuve | 7777 cm$^3$ |
| Temps de mélangeage | 230 sec |
| Température de tombée | 165°C |
| Coefficient de remplissage | 70% |
| Vitesse palettes | 50°rpm |
| Energie spécifique fournie | 850 J/g |

| Procédé conventionnel | |
|---|---|
| Composition finale C' | Finition Outil à cylindre |
| Temps de mélangeage | 10 min |
| Entrefer | 3,5 mm |
| Diamètre des cylindres | 300 mm |
| Vitesse cylindre 1 | 12 rpm |
| Vitesse cylindre 2 | 16,2 rpm |

Les valeurs comparatives (en base 100) suivantes ont été obtenues :

| | Procédé témoin Composition C' | Procédé selon l'invention Composition C |
|---|---|---|
| Module à 100 | 100 | 94 |
| Module à 300 | 100 | 114 |
| Module à 300/Module à 100 | 100 | 122 |
| Tangente $\delta_{max}$ | 100 | 81 |

A titre d'exemple, les résultats comparatifs suivants ont été obtenus pour une composition de caoutchouc D à base d'élastomères synthétiques (SBR et BR) et de silice du type :

| Composition D | en PCE |
|---|---|
| BR | 30 |
| SBR fonctionnel D3* | 70 |
| Silice 165G | 70 |
| N234 | 3 |
| 6PPD[1] | 1,9 |
| Huile | 13 |
| Cire Ozone | 1,5 |
| Résine | 5,5 |
| Silane Liquide | 5,3 |
| Acide stéarique | 2 |
| DPG | 1,4 |
| ZnO | 1,2 |
| CBS[2] | 1,6 |
| Soufre | 1 |
| [1] Santoflex 6PPD fourni par la Sté Flexsys [2] Santocure CBS fourni par la Sté Flexsys | |

La composition de caoutchouc finale améliorée D a été obtenue avec le procédé selon l'invention, dont les principaux paramètres de fonctionnement sont résumés ci-après :

| Procédé selon l'invention, | |
|---|---|
| Composition initiale D | Mélangeur interne Etapes A, B, C |
| Volume de la cuve | 3332 cm$^3$ |
| Température de tombée | 185°C |
| Coefficient de remplissage | 70% |
| Energie spécifique fournie | 520 J/g |
| Temps de séjour entre 180°C et 200°C | 30 sec. |

| Procédé selon l'invention, | |
|---|---|
| **Composition initiale D** | **Outil à cylindre Etape D** |
| Temps de refroidissement | 4 min |
| Température des cylindres | 50°C |
| Entrefer | 3mm |
| Diamètre des cylindres | 200 mm |
| Vitesse cylindre 1 | 17 rpm |
| Vitesse cylindre 2 | 13 rpm |

| Procédé selon l'invention | |
|---|---|
| **Composition finale D** | **Finition Outil à cylindre** |
| Temps de mélangeage | 10 min |
| Entrefer | 2,5 mm |
| Diamètre des cylindres | 200 mm |
| Vitesse cylindre 1 | 17 rpm |
| Vitesse cylindre 2 | 13 rpm |

Les résultats témoins sont obtenus à l'aide d'un procédé témoin de mise en oeuvre classique du type mélangeur interne et externe en deux phases (introduction du système de réticulation sur un outil à cylindre de type mélangeur externe) pour une composition de caoutchouc D' identique à D, et dont les principaux paramètres de fonctionnement sont résumés ci après :

| Procédé conventionnel | |
|---|---|
| **Composition initiale D'** | **Mélangeur interne** |
| Volume de la cuve | 3332 cm$^3$ |
| Temps de mélangeage | 250 sec |
| Température de tombée | 160°C |
| Coefficient de remplissage | 70% |
| Vitesse palette | 40 et 50 rpm |
| Energie spécifique fournie | 430 J/g |

| Procédé conventionnel | |
|---|---|
| **Composition finale D'** | **Finition Outil à cylindre** |
| Temps de mélangeage | 10 min |
| Entrefer | 2,5 mm |
| Diamètre des cylindres | 200 mm |
| Vitesse cylindre 1 | 17 rpm |
| Vitesse cylindre 2 | 13 rpm |

Les valeurs comparatives (en base 100) suivantes ont été obtenues :

| | Procédé témoin Composition D' | Procédé selon l'invention Composition D |
|---|---|---|
| Module à 100 | 100 | 91 |
| Module à 300 | 100 | 100 |
| Module à 300/Module à 100 | 100 | 111 |

(suite)

|  | Procédé témoin Composition D' | Procédé selon l'invention Composition D |
|---|---|---|
| Tangente $\delta_{max}$ | 100 | 91 |

A titre d'exemple, les résultats comparatifs suivants ont été obtenus pour une composition de caoutchouc E à base de coupage d'élastomères naturel et (NR et SBR) et de noir de carbone du type :

| Composition E | en PCE |
|---|---|
| NR | 50 |
| SBR | 50 |
| N234 | 54 |
| 6PPD[1] | 2 |
| Paraffine 6266 | 1 |
| Acide stéarique | 2 |
| ZnO | 1,2 |
| CBS[2] | 1,1 |
| Soufre | 1,1 |
| [1] Santoflex 6PPD fourni par la Sté Flexsys [2] Santocure CBS fourni par la Sté Flexsys | |

La composition de caoutchouc finale améliorée E a été obtenue avec le procédé selon l'invention, dont les principaux paramètres de fonctionnement sont résumés ci-après :

| Procédé selon l'invention, Composition initiale E         Mélangeur interne Etapes A, B, C | |
|---|---|
| Volume de la cuve | 3332 cm³ |
| Température de tombée | 190°C |
| Coefficient de remplissage | 75% |
| Energie spécifique fournie | 1270 J/g |
| Temps de séjour entre 180°C et 200°C | 60 sec. |

| Procédé selon l'invention, Composition initiale E         Outil à cylindre Etape D | |
|---|---|
| Temps de refroidissement | 4 min |
| Température des cylindres | 23°C |
| Entrefer | 3mm |
| Diamètre des cylindres | 200 mm |
| Vitesse cylindre 1 | 17 rpm |
| Vitesse cylindre 2 | 13 rpm |

| Procédé selon l'invention Composition finale E         Finition Outil à cylindre | |
|---|---|
| Temps de mélangeage | 10 min |
| Entrefer | 2,5 mm |

(suite)

| Procédé selon l'invention | |
|---|---|
| Composition finale E | Finition Outil à cylindre |
| Diamètre des cylindres | 200 mm |
| Vitesse cylindre 1 | 17 rpm |
| Vitesse cylindre 2 | 13 rpm |

Les résultats témoins sont obtenus à l'aide d'un procédé témoin de mise en oeuvre classique du type mélangeur interne et externe en deux phases (introduction du système de réticulation sur un outil à cylindre de type mélangeur externe) pour une composition de caoutchouc E' identique à E, et dont les principaux paramètres de fonctionnement sont résumés ci-après :

| Procédé conventionnel | |
|---|---|
| Composition initiale E' | Mélangeur interne |
| Volume de la cuve | 3332 cm$^3$ |
| Temps de mélangeage | 230 sec |
| Température de tombée | 170°C |
| Coefficient de remplissage | 72% |
| Vitesse palette | 55 rpm |
| Energie spécifique fournie | 970 J/g |

| Procédé conventionnel | |
|---|---|
| Composition finale E' | Finition Outil à cylindre |
| Temps de mélangeage | 10 min |
| Entrefer | 2,5 mm |
| Diamètre des cylindres | 200 mm |
| Vitesse cylindre 1 | 17 rpm |
| Vitesse cylindre 2 | 13 rpm |

Les valeurs comparatives (en base 100) suivantes ont été obtenues :

| | Procédé témoin Composition E' | Procédé selon l'invention Composition E |
|---|---|---|
| Module à 100 | 100 | 98 |
| Module à 300 | 100 | 103 |
| Module à 300/Module à 100 | 100 | 104 |
| Tangente $\delta_{max}$ | 100 | 86 |

Dans tous les cas exemplifiés, on observe une nette diminution de la valeur de tangente $\delta_{max}$, et une augmentation de l'indice de renforcement, défini comme le rapport entre le module à 300% et le module à 100%.

## Revendications

1. Procédé de fabrication d'une composition de caoutchouc initiale au cours duquel on effectue successivement les étapes suivantes :

A- on introduit dans un moyen de mélangeage de type mélangeur interne (100) du type comprenant une cuve de mélangeage (116) dans laquelle sont montés des rotors (112, 113) animés en rotation et comportant des projections radiales formant entre elles et avec la cuve un entrefer (e), une matrice de caoutchouc, des charges de renforcement, et éventuellement d'autres composants, à l'exception du système de réticulation,

B- on effectue le mélangeage desdits composants dans la cuve jusqu'à obtenir un mélange homogène en s'assurant que la température du mélange demeure inférieure ou égale à 170°C **caractérisé en ce qu'**après,

C- on régule la vitesse de rotation des rotors de manière à porter la composition de caoutchouc à une température de tombée comprise entre 180°C et 240°C, en un temps inférieur à 600 secondes, et préférentiellement inférieur à 400 secondes,

D- une fois la température de tombée atteinte, on extrait la composition de caoutchouc initiale du mélangeur interne et on abaisse la température de ladite composition à une température inférieure à 140°C en moins de 5 minutes.

**2.** Procédé selon la revendication 1, dans lequel les charges de renforcement sont constituées à titre majoritaire de silice, et dans lequel la température de tombée est comprise préférentiellement entre 180°C et 200°C.

**3.** Procédé selon la revendication 1, dans lequel les charges de renforcement sont constituées à titre majoritaire de noir de carbone, et dans lequel la température de tombée est comprise préférentiellement entre 200°C et 240°C.

**4.** Procédé selon l'une des revendications 1 à 3, dans lequel, au cours de l'étape A, on incorpore également des additifs.

**5.** Procédé selon l'une des revendications 1 à 4, dans lequel le taux de remplissage du mélangeur interne, est supérieur ou égal à 70%.

**6.** Procédé selon l'une des revendications 1 à 5, dans lequel, au cours de l'étape C, et avant d'extraire la composition de caoutchouc initiale du mélangeur, on maintient ladite composition à la température de tombée pendant un temps donné, tout en veillant à ce que la durée totale de ladite étape C n'excède pas 600 secondes.

**7.** Procédé selon l'une des revendications 1 à 6, dans lequel l'énergie spécifique conférée au mélange est comprise entre 1000 joules/grammes et 7500 joules/grammes.

**8.** Procédé selon l'une des revendications 1 à 7, dans lequel, à l'issue de l'étape D on réalise une composition de caoutchouc finale à l'aide d'un ou plusieurs moyen(s) de mélangeage continu ou discontinu (100, 200) de type mélangeur interne et/ou externe, en incorporant un volume prédéterminé de la composition de caoutchouc initiale, le système de réticulation, ainsi qu'un complément éventuel d'élastomère, de charges et d'additifs, en choisissant les paramètres de fonctionnement du moyen de mélangeage en continu ou discontinu (100, 200) de sorte que l'énergie spécifique complémentaire conférée à la composition de caoutchouc au cours de cette étape soit comprise entre 500 joules/grammes et 2000 joules/grammes.

**Patentansprüche**

**1.** Verfahren zur Herstellung einer Ausgangskautschukmischung, während dessen nacheinander die folgenden Schritte ausgeführt werden

A- in eine Mischeinrichtung von der Art Innenmischer (100) von der Art, die einen Mischbehälter (116) enthält, in den Rotoren (112, 113) montiert sind, die in Drehung versetzt werden und radiale Vorsprünge aufweisen, die zwischen sich und mit dem Behälter einen Luftspalt (e) bilden, werden eine Kautschukmatrix, Verstärkungsfüllstoffe und ggf. andere Bestandteile eingeführt, mit Ausnahme des Vernetzungssystems,

B- das Mischen der Bestandteile im Behälter wird ausgeführt, bis eine homogene Mischung erhalten wird, indem sichergestellt wird, dass die Temperatur der Mischung niedriger als oder gleich 170°C bleibt,

**dadurch gekennzeichnet, dass** danach

C- die Drehgeschwindigkeit der Rotoren wird so geregelt, dass die Kautschukzusammensetzung in einer Zeit von weniger als 600 Sekunden, und vorzugsweise von weniger als 400 Sekunden, auf eine "Fall"-Temperatur (temperature de tombée) zwischen 180°C und 240°C gebracht wird,

D- wenn die Falltemperatur erreicht ist, wird die Ausgangskautschukzusammensetzung aus dem Innenmischer entnommen und die Temperatur der Zusammensetzung in weniger als 5 Minuten auf eine Temperatur von weniger als 140°C gesenkt.

**2.** Verfahren nach Anspruch 1, wobei die Verstärkungsfüllstoffe zum größten Teil aus Kieselsäure bestehen, und wobei die Falltemperatur vorzugsweise zwischen 180°C und 200°C liegt.

**3.** Verfahren nach Anspruch 1, wobei die Verstärkungsfüllstoffe zum größten Teil aus Ruß bestehen, und wobei die Falltemperatur vorzugsweise zwischen 200°C und 240°C liegt.

**4.** Verfahren nach einem der Ansprüche 1 bis 3, wobei während des Schritts A ebenfalls Zusatzstoffe eingearbeitet werden.

**5.** Verfahren nach einem der Ansprüche 1 bis 4, wobei der Füllgrad des Innenmischers höher als oder gleich 70% ist.

**6.** Verfahren nach einem der Ansprüche 1 bis 5, wobei während des Schritts C und vor der Entnahme der Ausgangskautschukzusammensetzung aus dem Mischer die Zusammensetzung während einer gegebenen Zeit auf der Falltemperatur gehalten wird, wobei darauf geachtet wird, dass die Gesamtdauer des Schritts C 600 Sekunden nicht überschreitet.

**7.** Verfahren nach einem der Ansprüche 1 bis 6, wobei die der Mischung verliehene spezifische Energie zwischen 1000 Joule/Gramm und 7500 Joule/Gramm liegt.

**8.** Verfahren nach einem der Ansprüche 1 bis 7, wobei nach dem Schritts D eine Endkautschukzusammensetzung mit Hilfe einer oder mehrerer Einrichtungen zum kontinuierlichen oder diskontinuierlichen Mischen (100, 200) von der Art Innen- und/oder Außenmischer hergestellt wird, indem ein vorbestimmtes Volumen der Ausgangskautschukmischung, das Vernetzungssystem sowie eine mögliche Beigabe von Elastomermaterial, Füllstoffen und Zusatzstoffen eingearbeitet werden, indem die Betriebsparameter der Einrichtung zum kontinuierlichen oder diskontinuierlichen Mischen (100, 200) so gewählt werden, dass die der Kautschukzusammensetzung während dieses Schritts verliehene zusätzliche spezifische Energie zwischen 500 Joule/Gramm und 2000 Joule/Gramm liegt.

## Claims

**1.** Method for the production of an initial rubber composition, in the course of which the following steps are carried out in succession:

A- a rubber matrix, reinforcing fillers, and other components if required, with the exception of the cross-linking system, are introduced into a mixing means of the internal mixer type (100), comprising a mixing chamber (116) in which there are mounted rotors (112, 113) which are driven in rotation and have radial projections forming a gap (e) between themselves and the vessel,
B- said components are mixed in the chamber until a uniform mixture is obtained, care being taken to ensure that the temperature of the mixture remains at or below 170°C, **characterized in that** after,
C- the rotation speed of the rotors is adjusted so as to bring the rubber composition to a dropping temperature in the range from 180°C to 240°C, in a time of less than 600 seconds, and preferably less than 400 seconds, and
D- when the dropping temperature has been reached, the initial rubber composition is removed from the internal mixer and the temperature of said composition is brought below 140°C in less than 5 minutes.

**2.** Method according to Claim 1, wherein the reinforcing fillers consist mainly of silica, and wherein the dropping temperature is preferably in the range from 180°C to 200°C.

**3.** Method according to Claim 1, wherein the reinforcing fillers consist mainly of carbon black, and wherein the dropping temperature is preferably in the range from 200°C to 240°C.

**4.** Method according to any one of Claims 1 to 3, wherein additives are also incorporated during step A.

**5.** Method according to any one of Claims 1 to 4, wherein the filling ratio of the internal mixer is equal to or greater than 70%.

6. Method according to any one of Claims 1 to 5, wherein, during step C, and before the initial rubber composition is removed from the mixer, said composition is kept at the dropping temperature for a given time, while care is taken to ensure that the total duration of said step C does not exceed 600 seconds.

7. Method according to any one of Claims 1 to 6, wherein the specific energy imparted to the mixture is in the range from 1000 joules/gram to 7500 joules/gram.

8. Method according to any one of Claims 1 to 7, wherein, at the end of step D, a final rubber composition is formed using one or more continuous or batch mixing means (100, 200) of the internal mixer and/or external mixer type, with the incorporation of a specified volume of the initial rubber composition, the cross-linking system, and any necessary supplementary elastomer, fillers and additives, the operating parameters of the continuous or batch mixing means (100, 200) being chosen in such a way that the supplementary specific energy imparted to the rubber composition during this step is in the range from 500 to 2000 joules per gram.

**100**

**114**

**e**

**116**

**113**

**112**

**111**

**110**

**Fig 1**

**213**

**214**

**200**

**202**

**201**

**e**

**212**

**211**

**Fig 2**

Fig 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1052949
- FR 2958874 A1
- US 2002068774 A1